# EUROPEAN PATENT SPECIFICATION

(11) **EP 4 397 979 B1**
(45) Date of publication and mention of the grant of the patent: **05.08.2026**
(21) Application number: 22864023.1
(22) Date of filing: 24.06.2022
(51) Int. Cl.: G01N 35/10

(54) **ULTRASONIC CLEANING MACHINE, AUTOMATIC ANALYSIS DEVICE USING SAME, AND METHOD FOR CLEANING DISPENSING NOZZLE**
ULTRASCHALLREINIGUNGSMASCHINE, AUTOMATISCHE ANALYSEVORRICHTUNG DAMIT UND VERFAHREN ZUR REINIGUNG EINER ABGABEDÜSE
MACHINE DE NETTOYAGE À ULTRASONS, DISPOSITIF D'ANALYSE AUTOMATIQUE L'UTILISANT ET PROCÉDÉ DE NETTOYAGE DE BUSE DE DISTRIBUTION

(30) Priority: 31.08.2021 JP 2021140867
(43) Date of publication of application: 10.07.2024
(73) Proprietor: HITACHI HIGH-TECH CORPORATION, Tokyo 105-6409 (JP)
(72) Inventor: HORIE, Yosuke, Tokyo 100-8280 (JP); NOJIMA, Akihiro, Tokyo 100-8280 (JP); KOBAYASHI, Ryou, Tokyo 100-8280 (JP); TAKAYAMA, Hiroyuki, Tokyo 105-6409 (JP); NONAKA, Kohei, Tokyo 105-6409 (JP)
(74) Representative: MERH-IP Matias Erny Reichl Hoffmann Patentanwälte PartG mbB
(86) International application number: PCT/JP2022/025238
(87) International publication number: WO 2023/032435

(56) References cited:
- WO-A1-2017/002740
- WO-A1-2020/044998
- CN-U- 209 918 478
- JP-A- 2010 133 727
- JP-A- H11 341 598

## Description

### Technical Field

The present disclosure relates to an ultrasonic cleaner, an automatic analyzer using same, and a method for cleaning a dispensing nozzle.

### Background Art

An automatic analyzer performs component analysis by mixing a sample of serum or urine with a reagent and measuring the transmittance or the like of light projected onto the mixed liquid. In the automatic analyzer, because a sample is dispensed by repeatedly using the same nozzle, nozzle cleaning processing to wash the tip of the nozzle using a water flow is performed before aspirating another sample. However, in an automatic analyzer having a high throughput performance, because the dispensing processing is performed at high speed, not enough time can be used for nozzle cleaning. Therefore, dirt derived from the sample component may accumulate at the tip of the nozzle, and the dirt is removed by daily cleaning maintenance or the like.

When dirt accumulates at the tip of the nozzle, variations in the dispensed amount and carry-over, in which the previous sample component is carried over to the next sample, are likely to occur, and the measurement accuracy is diminished.

PTL 1 discloses an ultrasonic cleaner having a diaphragm to which a bolted Langevin transducer (BLT) is attached, the ultrasonic cleaner having a configuration in which an opening is provided on a lateral surface of a cleaning tank that stores cleaning liquid and the opening is closed by a diaphragm, and cavitation (phenomenon where the generation and disappearance of bubbles occur due to a pressure difference generated in a liquid) is generated using ultrasonic waves to clean a dispensing nozzle.

In addition, PTL 2 discloses a cleaning rack that includes a cleaning tank, an ultrasonic wave generating element, and an electronic circuit that controls the ultrasonic wave generating element in order to automate maintenance work, that cleans a nozzle used for aspiration and discharge of a sample or a reagent in the cleaning tank, and that is movable along a conveyance line. Another document disclosing a cleaner of the ultrasonic type comprising:a cleaning tank with a recess that enables insertion of a dispensing nozzle to be cleaned and an ultrasonic transducer having a piezoelectric element and a front mass, is known from PTL 3. This document is therefore regarded as comprising the preamble of claim 1.

### Citation List

### Patent Literature

PTL 1: WO 2017/002740
PTL 2: JP 2014-89200 A PTL 3: JP2010 133727 A

### Summary of Invention

### Technical Problem

In a case where a unit enabling cleaning and maintenance of the nozzle is newly added to an automatic analyzer that has already been delivered and is actually in use, it is desirable for a small cleaning unit to be added to a narrow space remaining between the installed parts or for the cleaning unit to be temporarily added during maintenance. This is because large-scale hardware changes involve problems such as higher reconstruction costs and periods during which analysis cannot be performed.

The cleaning rack disclosed in PTL 2 has a configuration in which an ultrasonic wave generating element (piezoelectric element) is installed directly on a bottom surface or a lateral surface of a cleaning tank.

In a case where a piezoelectric element is installed in a general ultrasonic cleaner, the amplitude of the ultrasonic irradiation surface is amplified by using a wide surface-area portion such as the bottom surface of the cleaning tank as a diaphragm, and standing waves are generated in the liquid by the vibration. The standing waves have a region where the sound pressure becomes high (antinode portion of the standing waves), and cavitation occurs in the same region. In order to perform cleaning based on such a principle, in a rack requiring compactness (a small surface area) of a bottom surface (or a lateral surface) in comparison with a commercially available ultrasonic cleaner, sufficient amplitude is not generated, and a cleaning effect due to the generation of cavitation is not readily obtained. In particular, in order to intensively clean the tip of the nozzle having a small diameter of 1 mm or less, the cleaning efficiency is low.

In order to clean the outer periphery of the nozzle with ultrasonic waves instead of manual cleaning maintenance, it is necessary to generate, on the outer peripheral portion of the nozzle tip, a high sound pressure region where ultrasonic cavitation is stably generated.

In the ultrasonic cleaner disclosed in PTL 1, **a** configuration example is shown in which a cleaning head provided at a tip of an ultrasonic transducer is made to vibrate to intensively clean a nozzle tip, and ultrasonic cavitation is generated in a hollow section in which the nozzle is inserted. In the same configuration, the vibrations amplified by the cleaning head are used to generate strong cavitation on the outer periphery of the nozzle tip. However, because the cleaning head is inserted from above the liquid surface in the cleaning tank, and the cleaning head vibrates in the liquid and in the air with the liquid surface interposed therebetween, there is a risk of large fluctuations of the liquid surface and of the liquid level fluctuating greatly and the liquid scattering, and thus the cleaning head is not suitable for the conveyance-type cleaning method. As in the same configuration, a cleaning tank in which the liquid can overflow is used for a cleaning device in which there are large liquid fluctuations in order to keep the liquid level constant, but it is difficult to use the cleaning tank for conveyance-type cleaning in which there are size limitations.

An object of the present disclosure is to provide an ultrasonic cleaner that has a configuration suitable for mounting in a narrow space such as a conveyance rack, that generates small liquid-surface fluctuations, and that is capable of using strong ultrasonic waves to irradiate an outer peripheral portion of a nozzle.

### Solution to Problem

An ultrasonic cleaner of the present disclosure includes: a cleaning tank having a recess that enables insertion of a dispensing nozzle to be cleaned; and an ultrasonic transducer having a piezoelectric element and a front mass, in which a lateral surface portion of the cleaning tank is provided with a through-hole having an opening on an outer wall surface of the cleaning tank and an inner wall surface of the recess, the front mass is inserted into the through-hole, and a tip portion of the front mass is disposed so as to emit ultrasonic waves from the side of the dispensing nozzle.

### Advantageous Effects of Invention

According to the present disclosure, it is possible to provide an ultrasonic cleaner that has a configuration suitable for mounting in a narrow space such as a conveyance rack, that generates small liquid-surface fluctuations, and that is capable of using strong ultrasonic waves to irradiate an outer peripheral portion of a nozzle.

Furthermore, according to the present disclosure, the nozzle can be inserted in a region close to the end surface of the columnar portion where the maximum amplitude of the ultrasonic transducer occurs, and the cleaning effect of the entire circumference of the nozzle can be improved through irradiation in two or more directions.

### Brief Description of Drawings

[FIG. 1] FIG. 1 is a perspective view illustrating an automatic analyzer according to a first embodiment.
[FIG. 2A] FIG. 2A is a top view illustrating an example of a configuration of a cleaning unit of an ultrasonic cleaner according to the first embodiment.
[FIG. 2B] FIG. 2B is a cross-sectional view taken along line A-A of FIG. 2A.
[FIG. 2C] FIG. 2C is a front view illustrating the cleaning unit of FIG. 2A.
[FIG. 2D] FIG. 2D is a perspective view illustrating an ultrasonic transducer used in the cleaning unit of FIG. 2A.
[FIG. 2E] FIG. 2E is a perspective view illustrating the cleaning unit of FIG. 2A.
[FIG. 2F] FIG. 2F is a lateral view illustrating the cleaning unit of FIG. 2A.
[FIG. 3] FIG. 3 is a configuration view illustrating an example of a cleaning rack having the ultrasonic cleaner according to the first embodiment.
[FIG. 4A] FIG. 4A is a schematic diagram illustrating a case where there is one ultrasonic transducer of the ultrasonic cleaner.
[FIG. 4B] FIG. 4B is a schematic diagram illustrating a case where there are two ultrasonic transducers in the ultrasonic cleaner.
[FIG. 5A] FIG. 5A is a flowchart illustrating a method for cleaning a dispensing nozzle by using the ultrasonic cleaner according to the first embodiment.
[FIG. 5B] FIG. 5B is a flowchart illustrating a method for handling shake of the cleaning rack.
[FIG. 6A] FIG. 6A is a graph illustrating an example of drive patterns of two ultrasonic transducers included in the ultrasonic cleaner according to the first embodiment.
[FIG. 6B] FIG. 6B is a graph illustrating another example of the drive patterns of the two ultrasonic transducers.
[FIG. 7] FIG. 7 is a configuration diagram illustrating an automatic analyzer corresponding to a case where an ultrasonic cleaner built into the conveyance rack according to the first embodiment is used.
[FIG. 8A] FIG. 8A is a partial cross-sectional view illustrating an ultrasonic cleaner according to a second embodiment.
[FIG. 8B] FIG. 8B is a partial cross-sectional view illustrating an ultrasonic cleaner according to the second embodiment.
[FIG. 8C] FIG. 8C is a schematic diagram illustrating a cleaning mode corresponding to FIG. 8A.
[FIG. 8D] FIG. 8D is a schematic diagram illustrating a cleaning mode corresponding to FIG. 8B.
[FIG. 8E] FIG. 8E is a schematic diagram illustrating a modification of the ultrasonic cleaner in FIG. 8B.
[FIG. 9] FIG. 9 is a cross-sectional view illustrating a cleaning unit according to a third embodiment.

### Description of Embodiments

Hereinafter, embodiments of the present disclosure will be described in detail with reference to the drawings.

### First embodiment

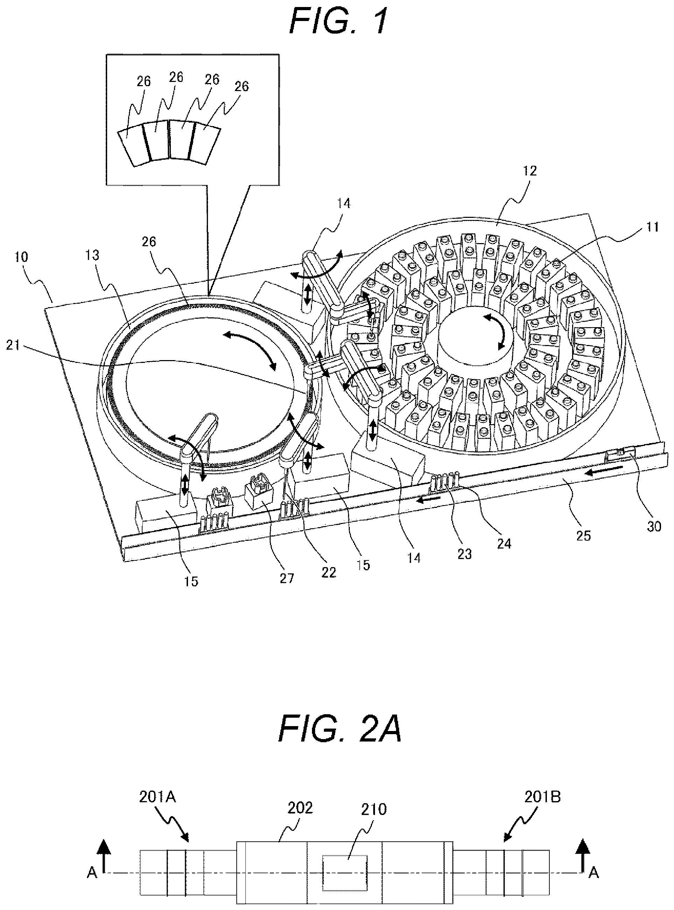

FIG. 1 is a perspective view illustrating an automatic analyzer according to a first embodiment.

As illustrated in FIG. 1, an automatic analyzer 10 includes a reagent disk 12 on which a plurality of reagent containers 11 are placed, a reaction disk 13 that mixes a reagent and a sample and measures a reaction, a reagent dispensing mechanism 14 that aspirates or discharges the reagent, and a sample dispensing mechanism 15 that aspirates or discharges the sample.

The reagent dispensing mechanism 14 includes a reagent nozzle 21 for dispensing a reagent. The sample dispensing mechanism 15 includes a sample nozzle 22 for dispensing a sample. Here, nozzles such as the reagent nozzle 21 and the sample nozzle 22 are collectively referred to as "dispensing nozzles".

The sample placed in the device is installed on a rack 24 in a state of being placed in a sample container 23 (test tube), and is conveyed by a conveyance line 25. A plurality of sample containers 23 are installed in the rack 24. Note that a sample is a sample derived from blood such as serum or whole blood, or is urine, or the like.

The sample dispensing mechanism 15 moves the sample nozzle 22 to an aspiration position in which the sample is aspirated from the sample container 23, a discharge position in which the sample is discharged to cells 26 (as illustrated in an enlarged manner in the drawing, each one of the cells is a small, separated container.), and a cleaning position in which the cleaning tank 27 for washing the tip of the sample nozzle 22 with water is present. Further, the sample dispensing mechanism 15 lowers the sample nozzle 22 in accordance with the height of the sample container 23 in the aspiration position, the height of the cell 26 in the discharge position, and the height of the cleaning tank 27 in the cleaning position.

In summary, the sample dispensing mechanism 15 is configured to be capable of moving the sample nozzle 22 to each stop position through rotational movement and vertical movement.

Note that control of the sample dispensing mechanism 15 and control of devices such as the conveyance line 25 are performed by a control unit (not illustrated). In addition, the automatic analyzer 10 includes a measurement unit (not illustrated), and performs photometry on a mixed liquid of a sample and a reagent housed in the cell 26 to analyze the concentration of a predetermined component contained in the sample. The measurement unit includes, for example, a light source and a photometer. The photometer is, for example, an absorptiometer or a scattering photometer.

The cleaning rack 30 where the ultrasonic cleaner is mounted includes a cleaning unit (described below), and is used to clean the tip portion of the sample nozzle 22 in contact with the sample. The timing used is a daily maintenance timing of the automatic analyzer 10, and is often performed before analysis or after analysis is completed. In a case where the number of samples handled in a day is large, the cleaning rack 30 may be caused to flow to the conveyance line 25 between analyses. Thus, the cleanliness of the sample nozzle 22 can be maintained.

The cleaning rack 30 is capable of cleaning the sample without being limited to the sample as long as the sample nozzle 22 or the reagent nozzle 21 is capable of accessing the conveyance line 25. In addition, although the plurality of sample nozzles 22 can be cleaned during one conveyance, dirt may re-attach as a result of re-using cleaning solution which has been contaminated by cleaning. The cleaning solution is thus desirably replaced for each nozzle. In this case, the method used may be a method in which one cleaning rack 30 is made to flow on the conveyance line 25 a plurality of times, or a plurality of cleaning racks 30 are made to flow thereon, and so forth. The reagent nozzle 21, which is inaccessible to the conveyance line 25, will be described in the second embodiment described below.

Note that, as the conveyance system of the conveyance line 25, a system that uses a belt, a pressing claw, or the like that moves along the conveyance line 25, or a system that uses an electromagnetic force, or the like, can be applied.

FIG. 2A is a top view illustrating an example of a configuration of a cleaning unit of an ultrasonic cleaner according to this embodiment.

In the drawing, the cleaning unit includes two ultrasonic transducers 201A and 201B (excitation units) and a cleaning tank 202. The cleaning tank 202 is provided with a liquid storage pit 210 (recess) having an opening in the upper surface thereof.

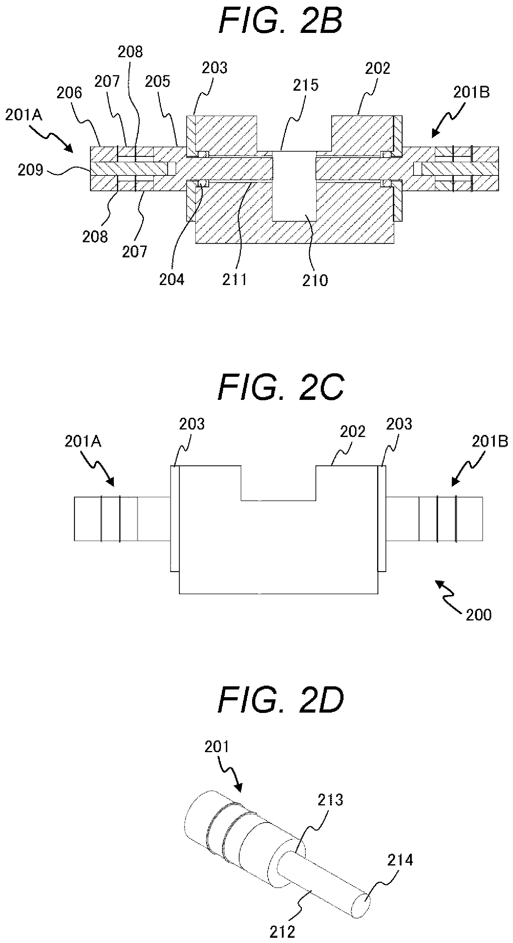

FIG. 2B is a cross-sectional view taken along line A-A of FIG. 2A.

As illustrated in the drawing, the cleaning tank 202 is provided with a through-hole 211 penetrating the liquid storage pit 210 from the left side and the right side in the drawing. In other words, the through-hole 211 has, in a lateral surface portion of the cleaning tank 202, an opening on the outer wall surface of the cleaning tank 202 and the inner wall surface of the liquid storage pit 210 (recess). The ultrasonic transducers 201A and 201B are inserted into the two through-holes 211, respectively. The ultrasonic transducers 201A and 201B are fixed to the lateral surface of the cleaning tank 202 by a flange 203 and a seal 204 (O-ring). Due to this configuration, liquid leakage from the through-hole 211 can be prevented.

The ultrasonic transducers 201A and 201B have the same configuration.

The ultrasonic transducers 201A and 201B include a front mass 205 (front metal block), a back mass 206 (back metal block), a plurality of piezoelectric elements 207, a plurality of electrodes 208 (copper plates), and fastening bolts 209. The piezoelectric elements 207 and the electrodes 208 have a configuration in which two of each are alternately stacked. The stacked piezoelectric elements 207 and electrodes 208 are sandwiched between the front mass 205 and the back mass 206, and are fixed by the fastening bolts 209.

Note that this drawing shows a configuration in which there are two of each of the alternately stacked piezoelectric elements 207 and electrodes 208, but the ultrasonic transducer according to the present disclosure is not limited to this number, rather, same may be configured to include four of each of the alternately stacked elements and electrodes, or another number thereof.

In summary, the ultrasonic transducers 201A and 201B have a bolted and fixed configuration similarly to a general bolted Langevin transducer (BLT: Bolt-clamped Langevin Type Transducer). Because the configuration of the BLT is advantageous for amplitude amplification, the BLT is used in cases where strong ultrasonic waves are used, and is also used in an industrial ultrasonic cleaner that requires a strong cleaning performance.

The ultrasonic transducers 201 are capable of maximizing the amplitude of the tip surface 214 of the front mass 205 by being driven at the resonance frequency.

A thin columnar portion, which is a portion inserted into the through-hole 211 of the front mass 205, is positioned by the seal 204. Therefore, a substantially uniform gap is formed between the columnar portion and the wall surface of the through-hole 211. The seal 204 is disposed at the base of the columnar portion. As a result, the columnar portion is capable of transmitting vibrations to the liquid in the liquid storage pit 210 without contacting the wall surface of the through-hole 211. In addition, because this gap exists, the deformation of the columnar portion 212 caused by the driving of the ultrasonic transducers 201 is not hindered.

Note that the liquid in the liquid storage pit 210 can be injected to the vicinity of the upper end portion 215 of the liquid storage pit 210. Thus, the gap formed around the columnar portion of the front mass 205 inserted into the through-hole 211 is filled with the liquid.

FIG. 2C is a front view illustrating the cleaning unit of FIG. 2A.

As illustrated in FIG. 2C, a cutout portion is formed in the central portion of the upper portion of the cleaning tank 202 of the cleaning unit 200. This notch is formed to keep the position of the liquid surface of the liquid storage pit 210 at the upper end portion 215 of the liquid storage pit 210.

FIG. 2D is a perspective view illustrating an ultrasonic transducer used in the cleaning unit of FIG. 2A.

As illustrated in FIG. 2D, the columnar portion 212 is formed in the front mass 205 of the ultrasonic transducers 201. A section at the base of the columnar portion 212 is a step portion 213. The tip surface 214 of the columnar portion 212 is a portion that irradiates, with ultrasonic waves, the liquid with which the tip surface is in contact.

A seal 204 is embedded in the lateral surface of the cleaning tank 202. The liquid stored in the liquid storage pit 210 is sealed by the seal 204 that makes contact in the vicinity of the step portion 213 at the base of the columnar portion 212. In other words, the seal 204 is installed at the base section of the columnar portion 212. In other words, the seal 204 is sandwiched between the base section of the columnar portion 212 and the inner wall surface of the through-hole 211.

Like a general BLT, the amplitude of the tip surface 214 of the ultrasonic transducer 201 is maximized, and the columnar portion 212 is deformed.

If the columnar portion 212 is configured to be completely constrained by the through-hole 211 of the cleaning tank, a large load is applied to the driving of the ultrasonic transducer 201, the vibration is hindered, and a sufficient cleaning effect cannot be obtained.

In the ultrasonic transducer 201 according to this embodiment, a node of vibration (a region where the amplitude is always small) is provided in the vicinity of the step portion 213. The seal 204 is made of an elastic material. Therefore, the influence of the contact between the columnar portion 212 and the seal 204 is small. In summary, the front mass 205 has a step portion 213, and the seal 204 is installed on the step portion 213, and due such a configuration, the vibration of the ultrasonic transducer 201 is propagated to the liquid with little hindrance.

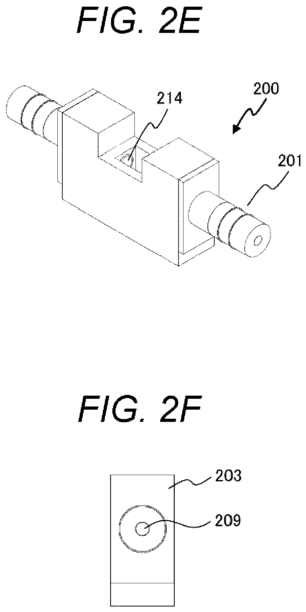

FIG. 2E is a perspective view illustrating the cleaning unit of FIG. 2A.

In FIG. 2E, the tip surface 214 of the columnar portion 212 of the ultrasonic transducer 201 reaches the position of the inner wall surface of the liquid storage pit 210 via the through-hole 211.

Note that, even in cases where the tip surface 214 does not reach the position of the inner wall surface of the liquid storage pit 210, in other words, even in a configuration in which the tip surface 214 of the columnar portion 212 is in the through-hole 211, a desired effect is obtained as long as the condition regarding the distance between the two tip surfaces 214 described below is satisfied.

FIG. 2F is a lateral view illustrating the cleaning unit of FIG. 2A.

FIG. 2F illustrates the arrangement of the fastening bolts 209 and the flange 203 of the ultrasonic transducer 201.

When the liquid is injected into the liquid storage pit 210, the tip surface 214 of the front mass 205 is immersed in the liquid. In this state, the two ultrasonic transducers 201 are driven to irradiate the liquid with ultrasonic waves from the tip surface 214. An upper end portion of the tip surface 214, which is an ultrasonic-wave irradiation portion, is desirably about 0.5 to 1 mm from the liquid surface (the upper end portion 215 of the liquid storage pit 210). Due to this arrangement, only the section of the sample nozzle 22 immersed in the liquid can be intensively cleaned.

In a case where the tip surface 214 is disposed deep from the liquid surface, the cleaning region is further away from the liquid level. Therefore, in order to clean the tip portion of the sample nozzle 22, it is necessary to insert the sample nozzle 22 deeply into the liquid. Due to such an arrangement, the wet range of the sample nozzle 22 increases. Because the sample nozzle 22 is designed to secure the dispensing accuracy by limiting the range wetted with the liquid, it is desirable not to wet a wide area. It is therefore desirable to provide a cleaning region close to the liquid surface.

The columnar portions 212 of the two ultrasonic transducers 201 are arranged symmetrically, with the liquid storage pit 210 serving as the central axis. In addition, the two columnar portions 212 are arranged such that central axes thereof coincide with each other. In other words, the central axes of the two columnar portions 212 are arranged coaxially. Due to this configuration, the sample nozzle 22 can be irradiated with ultrasonic waves from two directions 180 degrees apart, thus enabling the entire circumference of the sample nozzle 22 to be cleaned.

Note that it is desirable for the dimensions of the cleaning unit 200 to fit inside the rack 24. With such dimensions, the cleaning unit 200 can be moved to the position of the sample nozzle 22, and cleaning thereof can be performed.

The sample nozzle 22 is desirably inserted into the central axis of the liquid storage pit 210 in an upright direction. This is because the ultrasonic-wave irradiation can be uniformly received from the two ultrasonic transducers 201, and an appropriate and sufficient cleaning effect can thus be obtained. Note that, even in cases where the central axes of the two columnar portions 212 are not coaxial, a cleaning effect can be obtained.

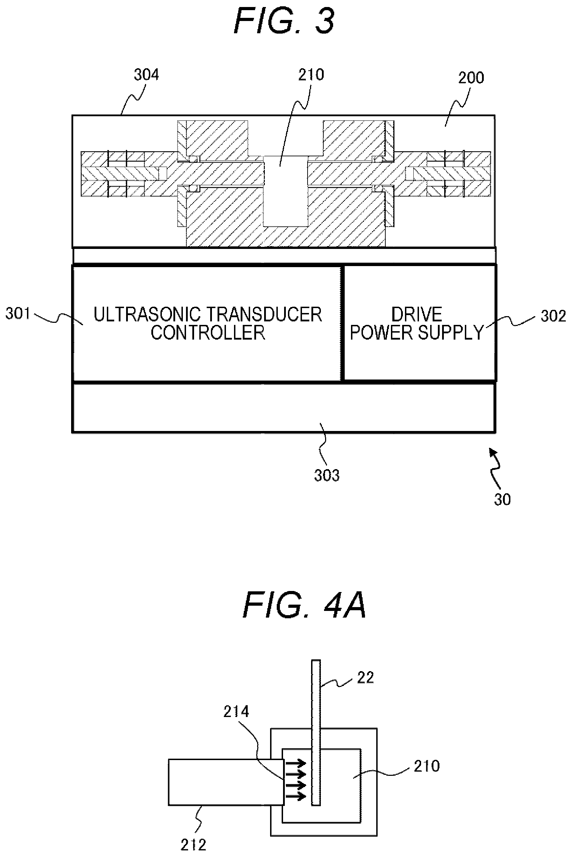

FIG. 3 is a configuration view illustrating an example of a cleaning rack having the ultrasonic cleaner according to this embodiment.

As illustrated in this drawing, the cleaning rack 30 includes a cleaning unit 200, an ultrasonic transducer controller 301, a drive power supply 302 (battery), and a conveyance base 303. The ultrasonic transducer controller 301 controls driving of the ultrasonic transducers 201A and 201B (FIG. 2A).

The ultrasonic transducer controller 301 drives the ultrasonic transducers 201 by generating sine waves at the resonance frequencies of the ultrasonic transducers 201A and 201B. In addition, the ultrasonic transducer controller 301 also includes an impedance matching circuit for increasing the drive current of the ultrasonic transducers 201 and amplifying the amplitude, and a circuit for performing automatic tracking of the resonance frequencies.

The drive power supply 302 is a rechargeable battery that is charged each time the cleaning rack 30 is used. The cleaning time of the sample nozzle 22 is in a range of several minutes or less, and it is not necessary to drive the sample nozzle for a long time, and therefore a small battery is sufficient. The drive power supply 302 may be charged by installing a wireless power supply unit in a predetermined position adjacent to the conveyance line 25.

The conveyance base 303 has the same shape as the bottom portion of the rack 24 used for the sample container 23. Therefore, it is not necessary to change the hardware of the conveyance line 25. Note that the cleaning rack 30 including the cleaning unit 200, the ultrasonic transducer controller 301, and the drive power supply 302 has a size equal to or less than the size of the rack 24 in a state where a conventional sample container 23 is installed.

The cleaning unit 200 is covered by a cover 304. The cover 304 prevents liquid from being applied to the piezoelectric elements 207 and the electrodes 208 when liquid is supplied to or discharged from the liquid storage pit 210 by a pipette or the like.

As described above, because the ultrasonic transducers 201 are sealed at the node of vibration, the vibration amplification efficiency is higher. In addition, by disposing the tip surface 214 of the ultrasonic transducers 201 close to the lateral surface portion of the sample nozzle 22, it is possible to irradiate the sample nozzle 22 with strong ultrasonic waves, and thus the cleaning effect can be enhanced. Further, by emitting ultrasonic waves from two directions, a configuration in which cleaning can be performed even in a narrow space such as the small cleaning rack 30 is implemented.

Note that the amount of cleaning solution required for cleaning varies depending on the size of the liquid storage pit 210, but is about several hundred µL to several mL. In addition, the cleaning effect can be obtained even with water as the cleaning liquid, but a mixture of detergent or detergent itself may be used. In cases where detergent is used, it is desirable to provide a cover for preventing liquid from being scattered also on the upper surface of the liquid storage pit 210.

As described above, the automatic analyzer according to the present disclosure has a configuration in which the ultrasonic cleaner according to this embodiment is used by conveyance.

FIG. 4A is a schematic diagram illustrating a case where there is one ultrasonic transducer of the ultrasonic cleaner.

Unlike FIG. 2A, FIG. 4A illustrates a case where an ultrasonic transducer is disposed only on one side. In this case, because ultrasonic waves are emitted from the tip surface 214 of one ultrasonic transducer, only one side of the sample nozzle 22 inserted into the liquid storage pit 210 is cleaned. In this case, because the outer surface of the sample nozzle 22 on the opposite side to the irradiation surface is not directly irradiated with ultrasonic waves, dirt may remain. In this case, it is necessary to clean the sample nozzle 22 again by using a cleaning rack which has cleaning units having tip surfaces 214 at different orientations.

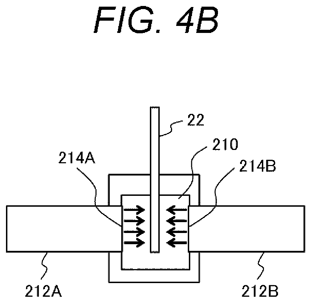

FIG. 4B is a schematic diagram illustrating a case where there are two ultrasonic transducers of the ultrasonic cleaner.

This drawing illustrates a case where the configuration is the same as that of the cleaning unit 200 in FIG. 2C. That is, by emitting ultrasonic waves from both sides (two directions) of the sample nozzle 22, the entire circumference can be cleaned for a sample nozzle 22 having a small diameter (about 1 mm) .

The distance between a tip surface 214A and a tip surface 214B is desirably about the same as the diameters of the columnar portions 212A and 212B. For example, when the columnar portion has a diameter of 3 mm, the distance between the tip surface 214A and the tip surface 214B is set at 3 mm, and when the columnar portion has a diameter of 5 mm, the distance between the tip surface 214A and the tip surface 214B is set at 5 mm. A region where the sound pressure concentrates in a hemispherical shape is generated from the tip surface 214. The diameter of the hemisphere at this time is about the same as the diameter of the tip surface 214, and in a case where ultrasonic waves are emitted from two coaxial surfaces, the distance at which the two hemispheres do not interfere with each other is the radius of the two hemispheres × 2 (diameter of the hemisphere). In addition, because the tip surface 214A and the tip surface 214B on the same axis also act as reflecting surfaces of mutually emitted ultrasonic waves, if the distance between the tip surface 214A and the tip surface 214B facing each other is too short, the cleaning efficiency is reduced.

In FIG. 4B, by making the distances between the sample nozzle 22 and the tip surface 214A and the distance between the sample nozzle 22 and the tip surface 214B close, it is possible to irradiate the outer peripheral portion of the sample nozzle 22 with strong ultrasonic waves, but as described above, the distance is set using the same distance as the diameter of the columnar portion 212 as a guide. That is, the condition that the cleaning efficiency is high is that the distance between the tip surface 214A and the tip surface 214B is about the same as the diameters of the columnar portions 212A and 212B.

However, as will be described below, in a case where the two ultrasonic transducers are alternately driven, the distance between the tip surface 214A and the tip surface 214B may be configured to be shorter than the diameter of the columnar portion 212.

In FIG. 4A, by setting the distance between the tip surface 214A and the wall surface of the liquid storage pit 210 (cleaning tank) to be about the same as the diameter of the columnar portion 212, it is possible to suppress the influence of reflection of the ultrasonic waves from the wall surface of the liquid storage pit 210.

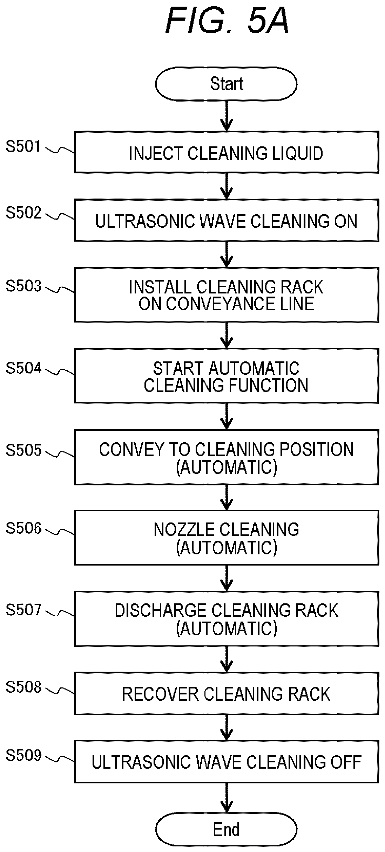

FIG. 5A is a flowchart illustrating a method for cleaning a dispensing nozzle by using the ultrasonic cleaner according to this embodiment.

As shown in this drawing, the cleaning solution is injected into the liquid storage pit 210 of the cleaning unit 200 (step S501). The signal output of the ultrasonic transducer controller 301 is then turned ON (step S502). The turning ON of the signal output is performed using a switch in the cleaning rack 30 or through communication with an external terminal. The cleaning rack 30 is installed on the conveyance line 25 (step S503). Thereafter, the automatic cleaning function is started from the terminal of the automatic analyzer 10 (step S504).

Here, steps S501 to S503 can be performed manually, or can be performed automatically using a cleaning liquid dispensing unit or the like, which is installed in the automatic analyzer 10. In this case, when a command signal for starting the automatic cleaning function is sent from the terminal of the automatic analyzer 10 as in step S504, the cleaning rack 30 is automatically installed in the conveyance line 25, and the cleaning solution is automatically injected into the liquid storage pit 210 of the cleaning unit 200.

When the automatic cleaning is started, the cleaning rack 30 is conveyed to a position where the target sample nozzle 22 is located (step S505). Note that, when the normal rack 24 is conveyed, the barcode attached to the lateral surface of the rack 24 is read to split the subsequent analysis and conveyance processing. Therefore, by attaching a barcode to the cleaning rack 30 in a position similar to that of the normal rack 24, the rack 24 used for inspection and the cleaning rack 30 used for cleaning can be distinguished in the automatic analyzer 10, thus enabling the cleaning operation to be executed.

After the cleaning rack 30 is conveyed to the vicinity of the target sample nozzle 22, the sample nozzle 22 is lowered toward the liquid storage pit 210, and the tip portion of the sample nozzle 22 is immersed in the cleaning solution for a certain period of time to perform cleaning (step S506). After cleaning is complete, the sample nozzle 22 is raised, and then the cleaning rack 30 is discharged (step S507). The discharged cleaning rack 30 is then collected (step S508). Thereafter, the ultrasonic wave signal output is turned OFF (step S509).

The cleaning liquid may then be replaced, as necessary, to carry out cleaning of another sample nozzle 22. In a case where the cleaning is not performed, the cleaning solution in the liquid storage pit 210 is discharged, and the procedure ends. At the end of the procedure, a new cleaning liquid is placed in the liquid storage pit 210, and the ultrasonic transducers 201 are driven, and thus the adhesion of the dirt that has entered the gap can be suppressed. Therefore, as maintenance of the cleaning unit 200 itself, the cleaning unit may be driven at times other than during conveyance.

In the process illustrated in this drawing, because the conveyance line 25 is moved in a state where the cleaning solution is held, it is desirable to provide control for detecting shake of the cleaning rack 30 and stopping the output of the ultrasonic waves.

If the ultrasonic waves are continuously emitted in a state where the cleaning rack 30 shakes significantly, there is a risk of the cleaning solution being scattered and wetting the interior of the device.

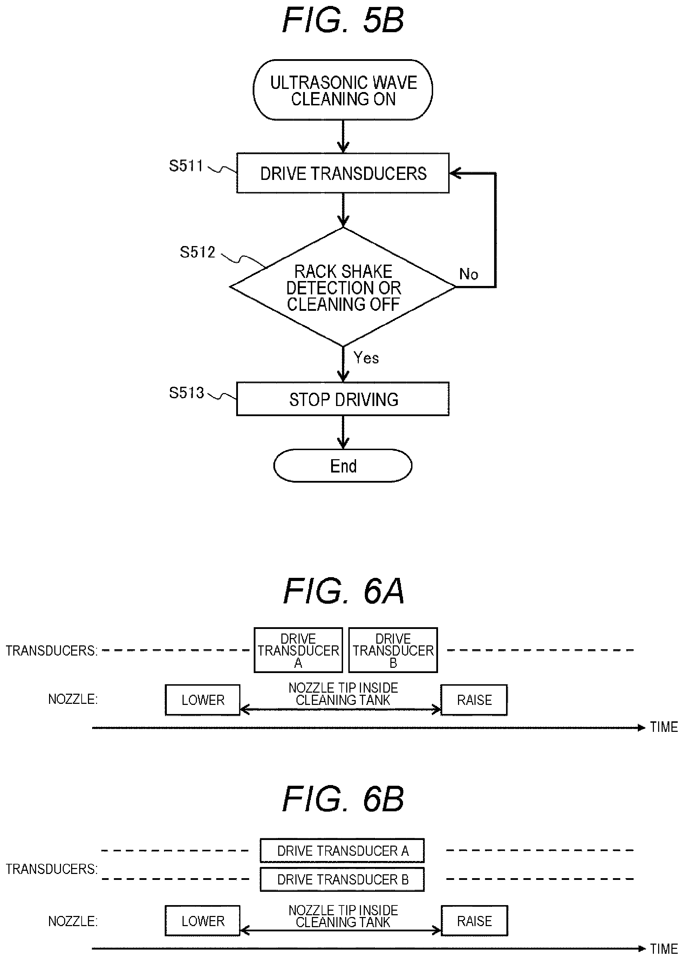

FIG. 5B is a flowchart illustrating a method for coping with shake of the cleaning rack.

In the drawing, in a case where the detection of the shake of the cleaning rack 30 or the reception of the cleaning OFF signal (including the turning OFF of the switch.) is detected (step S512) during the driving of the ultrasonic transducers 201 (step S511), the driving of the ultrasonic transducers 201 is stopped (step S513). Note that, in a case where the shake, and the like, of the cleaning rack 30 is not detected in step S512, the driving of the ultrasonic transducers 201 is continued (step S511).

Methods other than the detection of the shake, and the like, of the cleaning rack 30 include methods for performing control and communication of the automatic analyzer 10 to limit the timing for driving the ultrasonic transducers 201.

Note that, in order to prevent dirt remaining in the liquid storage pit 210 after cleaning from adhering to the liquid storage pit 210, the front mass 205, and the like, it is desirable to continue driving the ultrasonic transducers 201 until immediately before the cleaning liquid is discharged.

FIG. 6A is a graph illustrating an example of drive patterns of two ultrasonic transducers included in the ultrasonic cleaner according to this embodiment.

In the drawing, the two ultrasonic transducers A and B are driven alternately.

FIG. 6B is a graph illustrating another example of the drive patterns of the two ultrasonic transducers.

In the drawing, the two ultrasonic transducers A and B are driven simultaneously.

In any of the drive patterns, the period from when the sample nozzle 22 descends into the liquid storage pit 210 until same rises is the timing for cleaning.

As described above, in the method for turning ON the driving before the conveyance, the driving of the ultrasonic transducers A and B is repeated from before the sample nozzle 22 descends. In a case where the control and communication of the automatic analyzer 10 are performed to limit the drive timing of the ultrasonic transducers A and B, the period from when the sample nozzle 22 descends into the liquid storage pit 210 until same rises is the timing for cleaning. In this case, a slightly earlier or later ON-OFF timing is permissible.

In the pattern in which the ultrasonic transducers A and B are alternately driven as illustrated in FIG. 6A, the driving of the ultrasonic transducer A and the driving of the ultrasonic transducer B are controlled so as not to overlap with each other. In the control circuit, there is a circuit that switches the ultrasonic transducers A and B to which signals are to be output, and the outputs are switched at regular time intervals. In this case, the ultrasonic transducer controller 301 automatically tracks the resonance frequency of one of the driven ultrasonic transducers, and switches the ultrasonic transducer to be automatically tracked each time the driving is switched. As described above, because the ultrasonic transducers A and B can be maximized when driven at the resonance frequency, the cleaning effect by the ultrasonic waves emitted from the ultrasonic transducers A and B is also enhanced.

The switching of the driving of the ultrasonic transducers A and B may be performed, for example, every several hundred milliseconds to several seconds during cleaning. In this case, the switching may be performed a plurality of times during one cleaning. Starting the driving of any one of the ultrasonic transducers A and B in accordance with the timing for lowering the sample nozzle 22 can be implemented by performing the control and communication of the automatic analyzer 10 as described above.

Using the patterns with which the ultrasonic transducers A and B are simultaneously driven, the ultrasonic transducers A and B are desirably driven by the same output. One drive signal of the transducers is outputted from the control circuit, and the signal is split and outputted to the ultrasonic transducers A and B. In this case, the ultrasonic transducer controller 301 automatically tracks the resonance frequency of any one of the ultrasonic transducers A and B or drives the two ultrasonic transducers A and B at a frequency close to the resonance frequency (or an intermediate frequency). In order to drive the two ultrasonic transducers A and B at a frequency close to the resonance frequency, there exist a method for determining the drive frequency from a frequency measured in advance and a method for changing the drive frequency at any time by adding a circuit that detects the resonance frequency during driving.

Because the ultrasonic transducers A and B according to this embodiment have a simple shape, variations in the resonance frequency due to manufacture and assembly of the transducers are small. Therefore, if the drive frequency is close to the resonance frequency of the two ultrasonic transducers A and B, the two ultrasonic transducers A and B can be driven with a large amplitude.

The characteristics of the piezoelectric elements 207 of the ultrasonic transducers A and B may change due to heat generation, and the resonance frequency may deviate when the piezoelectric elements are driven for a long time. In this embodiment, the cleaning time is a few minutes or less even if the conveyance time is included in a short time of about several dozen seconds after the sample nozzle 22 is installed on the conveyance line until the sample nozzle descends, and the resonance frequency does not greatly deviate in the cleaning process. Therefore, a practical problem barely occurs even if the driving frequency is a fixed value. However, assuming an environment in which the room temperature changes throughout the year, it is desirable to have a resonance frequency detection function.

Note that, although the variation in impedance due to the manufacture, assembly, or the like of the ultrasonic transducers 201 is kept to a certain range in a shipping inspection or the like, if the difference between the two impedances is known, the balance of the cleaning power of the two ultrasonic transducers 201 can be adjusted by adjusting the respective drive voltages and cleaning times. However, because variations due to manufacture or assembly are small as described above, the entire circumference of the sample nozzle 22 can be cleaned by providing a sufficient cleaning time (for example, several dozen seconds or more).

Note that there may be three or more ultrasonic transducers 201. Also in this case, the ultrasonic waves may be emitted from the ultrasonic transducers 201 at the same time, or the ultrasonic waves may be emitted from any two or fewer of the three or more ultrasonic transducers 201. In other words, one or more of the ultrasonic transducers 201 may be alternately stopped, and a portion of the ultrasonic transducers 201 may emit ultrasonic waves alternately.

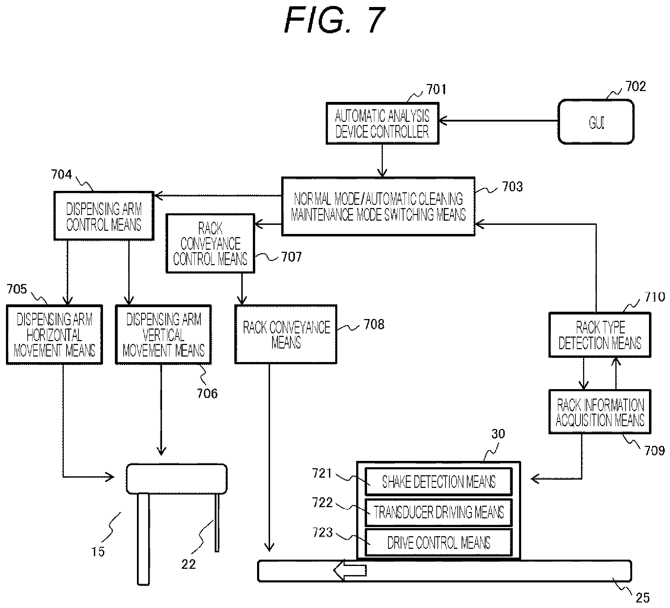

FIG. 7 is a configuration diagram illustrating an automatic analyzer corresponding to a case where an ultrasonic cleaner built into the conveyance rack according to this embodiment is used.

In this drawing, the automatic analyzer is controlled by an automatic analyzer controller 701. A user of the automatic analyzer is able to issue an analysis processing instruction or a cleaning processing instruction from a graphical user interface 702 (GUI). Switching between normal analysis processing and the cleaning maintenance mode according to this embodiment is performed by normal mode/automatic cleaning maintenance mode switching means 703 (a normal mode/automatic cleaning maintenance mode switching unit), and the sample dispensing mechanism 15 and the conveyance line 25 are controlled according to each mode.

The sample dispensing mechanism 15 controls the position of the sample nozzle 22 from dispensing arm control means 704 (a dispensing arm control unit) via dispensing arm horizontal movement means 705 (a dispensing arm horizontal movement unit) and dispensing arm vertical movement means 706 (a dispensing arm vertical movement unit) . In the cleaning maintenance mode, the horizontal position and the vertical position of the sample nozzle 22 are controlled so that the cleaning range of the tip portion of the sample nozzle 22 is immersed in the liquid in the liquid storage pit 210. The horizontal position of the sample nozzle 22 is preferably an intermediate position between the two tip surfaces 214, but it is also possible to perform control such as moving the sample nozzle horizontally while immersing same and causing the sample nozzle to approach the tip surface 214A or the tip surface 214B.

The conveyance line 25 is driven from rack conveyance control means 707 (a rack conveyance control unit) via rack conveying means 708 (a rack conveyance unit) . Rack information acquisition means 709 (barcode reader) installed on the conveyance line 25 reads the barcodes provided to the rack 24 and the cleaning rack 30, which have been conveyed, whereupon rack type detection means 710 (a rack type detection unit) determines the type of rack, and information on the rack type is sent to the normal mode/automatic cleaning maintenance mode switching unit 703. Switching to the cleaning maintenance mode is performed based on this information. Note that switching from the GUI to the cleaning maintenance mode can also be performed in advance. Instead of the barcode, a QR code (registered trademark), an IC chip, or the like may also be used. Alternatively, the determination may be performed through image recognition by a camera. Note that the rack information acquisition means 709 is also referred to as the "rack information acquisition unit".

The cleaning rack 30 includes, independently of the automatic analyzer controller 701, shake detection means 721 (a shake detection unit) that stops driving the ultrasonic transducer 201 upon detecting the above-described shake, transducer driving means 722 (a transducer drive unit) that detects and drives a resonance frequency of the ultrasonic transducers 201, and drive control means 723 (a drive control unit) that switches the driving of the two ultrasonic transducers 201. The shake detection means 721 is preferably an acceleration sensor or the like.

With the above configuration, the cleaning rack 30 is conveyed to a position on the conveyance line 25 accessible by the sample nozzle 22, and the cleaning region of the sample nozzle 22 can be cleaned by immersing the sample nozzle 22 in the liquid storage pit 210.

Note that the reagent nozzle 21 can also be implemented in a similar configuration as long as same is capable of accessing the conveyance line 25.

Note that, in this embodiment, a case where the reagent nozzle 21 and the sample nozzle 22 are provided separately has been described, but depending on the analyzer, the reagent and the sample may also be dispensed by one shared nozzle. Even in such a device, although cleaning using a water flow is performed every time a reagent or a sample is dispensed, daily maintenance is required, and the dispensing accuracy can be maintained by performing the ultrasonic cleaning of the present invention.

### Second Embodiment

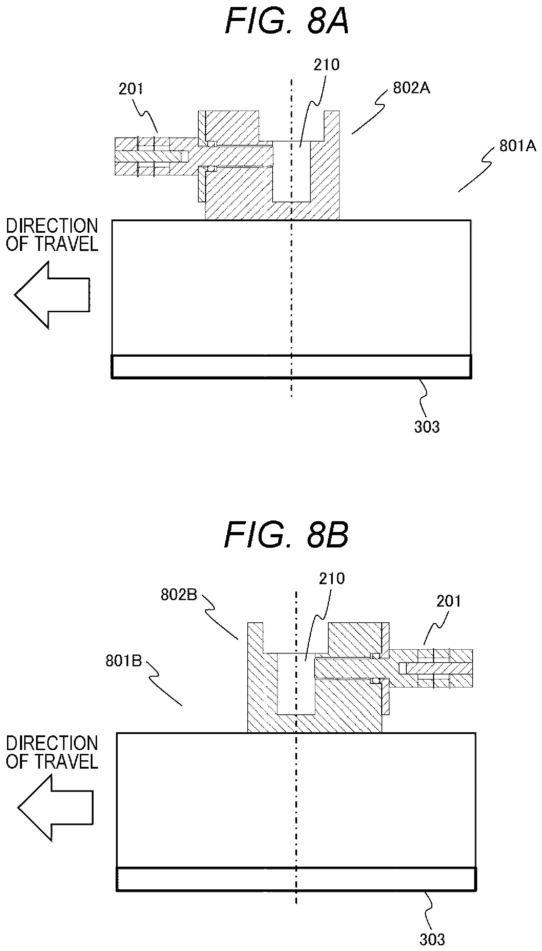

FIG. 8A is a partial cross-sectional view illustrating one of two types of ultrasonic cleaners according to a second embodiment.

In a cleaning rack 801A illustrated in this drawing, one ultrasonic transducer 201 is installed in a cleaning unit 802A, but the ultrasonic transducer 201 is disposed on the direction-of-travel side of the conveyance base 303.

FIG. 8B is a partial cross-sectional view illustrating another one of the two types of ultrasonic cleaners according to this embodiment.

In the cleaning rack 801B illustrated in this drawing, one ultrasonic transducer 201 is installed in the cleaning unit 802B, but the ultrasonic transducer 201 is disposed on the opposite side to the direction of travel of the conveyance base 303.

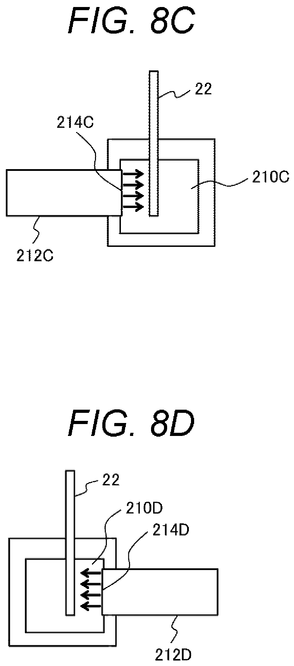

FIG. 8C is a schematic diagram illustrating a cleaning mode corresponding to FIG. 8A.

In FIG. 8C, the sample nozzle 22 immersed in the liquid in the liquid storage pit 210C is irradiated with ultrasonic waves from the tip surface 214C (left side in the drawing) of the columnar portion 212C.

FIG. 8D is a schematic diagram illustrating a cleaning mode corresponding to FIG. 8B.

In FIG. 8D, the sample nozzle 22 immersed in the liquid of the liquid storage pit 210D is irradiated with ultrasonic waves from the tip surface 214D (right side in the drawing) of the columnar portion 212D.

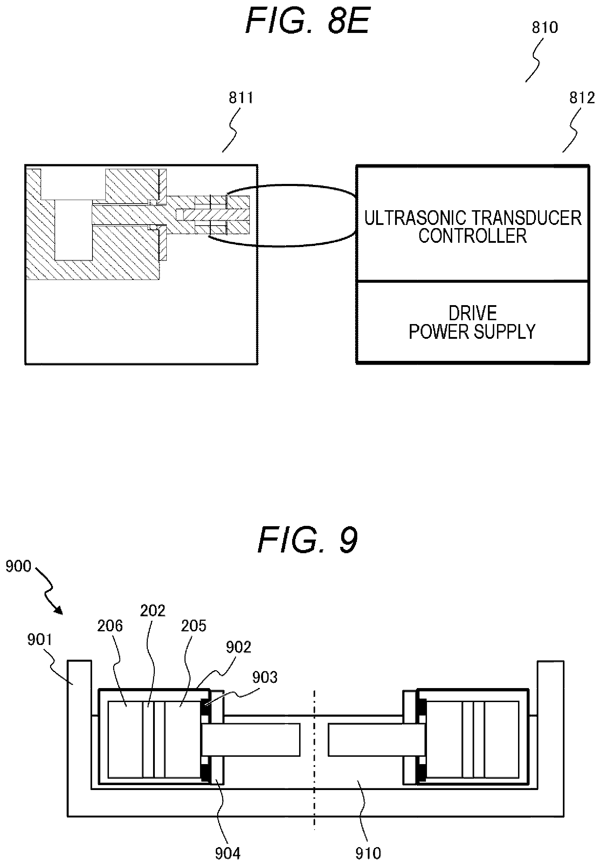

FIG. 8E is a schematic diagram illustrating a modification of the ultrasonic cleaner in FIG. 8A.

In a case where the ultrasonic transducer controller 301 and the drive power supply 302 are integrated together with the cleaning unit 200 as in the cleaning rack 30 illustrated in FIG. 3, the dimensions become large, and sometimes the ultrasonic transducer controller and the drive power supply cannot fit inside one reagent container.

The ultrasonic cleaner of FIG. 8E is obtained by separating constituent elements into two containers. That is, the cleaning unit is placed in one container 811, and the ultrasonic transducer controller and the drive power supply are placed in another container 812. In other words, the ultrasonic cleaner has a configuration in which the cleaning tank and the ultrasonic transducer, and the ultrasonic transducer controller and the drive power supply can be installed separately.

Using such separation into two, the two containers 811 and 812 can be installed on the reagent disk 12 in place of the two reagent containers 11 installed on the reagent disk 12 (FIG. 1) .

Because the reagent containers 11 can be installed so as to be adjacent to each other as shown in FIG. 1, the container 811 and the container 812 can be connected by wiring.

Therefore, in the example of FIG. 8E, the two containers 811 and 812 can be collectively referred to as a reagent container-type cleaning machine 810.

The ultrasonic cleaner according to this embodiment has a configuration in which one ultrasonic transducer is provided in one cleaning unit.

In this case, cleaning is performed using the two cleaning racks 801A, 801B.

In the cleaning racks 801A, 801B, the direction of travel is the same, but the irradiation directions of the ultrasonic waves are different. The conveyance line 25 of the automatic analyzer 10 has a structure that can be conveyed only in one direction. Therefore, the conveyance base 303 has a notch or the like, and has a structure in which the rack 24 cannot be installed in the wrong direction. Therefore, the cleaning rack 801A and cleaning rack 801B are different from each other only in terms of the shape of conveyance base 303.

The insertion position of the sample nozzle 22 in the liquid storage pit 210 is a position shorter than the distance of half the diameter of the columnar portion 212 from the tip surface 214. As described above, because a region having a strong sound pressure is generated in a hemispherical shape from the tip surface 214, when the sample nozzle 22 is inserted in a distant position, the cleaning efficiency is diminished.

In addition, by setting the insertion position of the sample nozzle 22 to the center of the cleaning rack, it is possible to perform control without changing the horizontal position when lowering the sample nozzle 22 twice (or a plurality of times).

In the cleaning effect according to this embodiment, the entire circumference of the sample nozzle 22 can be cleaned by performing cleaning twice in different directions similarly to when the ultrasonic transducers 201 according to the first embodiment are driven alternately. Although not illustrated in FIG. 1, the conveyance line 25 also includes a return conveyance line for returning the rack 24 to the position where the rack is loaded. Therefore, cleaning can also be alternately performed a plurality of times by causing the cleaning rack 801A and the cleaning rack 801B to circulate.

If the conveyance base 303 or the cleaning unit is configured to be rotatable by 180 degrees, the direction of travel can be changed even with one cleaning rack. In this case, a shaft may be provided at the center of the cleaning rack, and only the conveyance base 303 (or the cleaning unit 802) may rotate. In this case, the center line of the cleaning rack and the lowering position of the sample nozzle 22 are arranged to overlap each other. That is, as described above, the tip surface 214 is in a position shorter than the distance of half the diameter of the columnar portion 212 from the center line.

The cleaning unit according to the present embodiment has a smaller width than that of the first embodiment, and can be installed on the reagent disk 12 similarly to the reagent container 11. Also in this case, cleaning can be performed from two directions as in FIGS. 8A and 8B by installing a reagent container-type cleaning machine having two different irradiation directions.

In addition, because the reagent container-type cleaning machine can be installed on the reagent disk 12, same is suitable for cleaning the reagent nozzle 21.

According to the configuration of the present embodiment, in the cleaning of the sample nozzle 22 and the reagent nozzle 21, the entire periphery of the tip portions of the reagent nozzle 21 and the sample nozzle 22 can be cleaned by emitting the ultrasonic waves from another direction two or more times.

### Third Embodiment

FIG. 9 is a cross-sectional view illustrating a cleaning unit according to a third embodiment.

In this drawing, the cleaning unit 900 has a configuration in which two ultrasonic transducers 201 are installed in the cleaning tank 901. The two ultrasonic transducers 201 have a configuration for the purpose of waterproofing. The ultrasonic transducers 201 have a configuration in which a piezoelectric element 207, a back mass 206, and a portion of a front mass 205 are covered by a cover 902. Waterproofing is achieved by providing a seal portion 903 between the large-diameter section of the front mass 205 and a pressing portion 904. A columnar portion, which is a small diameter portion of the front mass 205, is in contact with the liquid 910 in the cleaning tank 901. Due to such a configuration, the liquid 910 does not come into contact with the electrical components of the piezoelectric elements 207 and the electrodes 208. Note that a gap is provided between the pressing portion 904 and the columnar portion 212 so that there is no contact therebetween.

The arrangement, cleaning method, and control method of the two ultrasonic transducers 201 are the same as those in the above-described embodiment.

The cleaning units according to the above three embodiments can also be fixed and used in the automatic analyzer 10 by adding means for automatically supplying and discharging the cleaning solution. Further, in the embodiment, two directions have been described as an example, but ultrasonic waves may be emitted from two or more directions, and the entire periphery of the nozzle can be more reliably cleaned. In the case of three directions, the cleaning efficiency is improved by installing the irradiation surfaces at intervals of 120 degrees. That is, three or more ultrasonic transducers may be installed in one cleaning unit.

The diameter of a common circle with which the tip surfaces of the front masses of three or more (a plurality of) ultrasonic transducers are in contact is desirably substantially equal to the diameter of the tip surfaces of the front masses. Here, a common circle denotes a circle in which the tip surfaces of the plurality of front masses arranged around the liquid storage pit 210 (recess) of the cleaning tank 202 are in contact with each other. The center of the circle coincides with the central axis of the recess in a case where the recess is circular when viewed from above.

In a case where there are two ultrasonic transducers and where the tip surfaces of the front masses face each other, the distance between the two tip surfaces corresponds to the diameter of the common circle.

### Reference Signs List

- 10: automatic analyzer
- 11: reagent container
- 12: reagent disk
- 13: reaction disk
- 14: reagent dispensing mechanism
- 15: sample dispensing mechanism
- 21: reagent nozzle
- 22: sample nozzle
- 23: sample container
- 24: rack
- 25: conveyance line
- 26: cell
- 27: cleaning tank
- 201: ultrasonic transducer
- 202: cleaning tank
- 203: flange
- 204: seal
- 205: front mass
- 206: back mass
- 207: piezoelectric element
- 208: electrode
- 209: fastening bolt
- 210: liquid storage pit
- 211: through-hole
- 212: columnar portion
- 213: step portion
- 214: tip surface
- 301: ultrasonic transducer controller
- 302: drive power supply
- 303: conveyance base
- 304: cover
- 701: automatic analyzer controller
- 702: graphical user interface
- 703: normal mode/automatic cleaning maintenance mode switching means
- 704: dispensing arm control means
- 705: dispensing arm horizontal movement means
- 706: dispensing arm vertical movement means
- 707: rack conveyance control means
- 708: rack conveying means
- 709: rack information acquisition means
- 710: rack type detection means
- 721: shake detection means
- 722: transducer driving means
- 723: drive control means
- 801A, 801B: cleaning rack
- 802A, 802B: cleaning unit
- 810: reagent container-type cleaning machine
- 811, 812: container
- 900: cleaning unit
- 901: cleaning tank
- 902: cover
- 903: seal portion
- 904: pressing portion

## Claims

1. An ultrasonic cleaner, comprising:
a cleaning tank (27) having a recess (210) that enables insertion of a dispensing nozzle (21,22) to be cleaned; and
an ultrasonic transducer (201) having a piezoelectric element (207) and a front mass (205),
**characterised in that** a lateral surface portion of the cleaning tank (27) is provided with a through-hole having an opening on an outer wall surface of the cleaning tank (27) and an inner wall surface of the recess (210),
the front mass (205) is inserted into the through-hole, and
a tip portion of the front mass (205) is disposed so as to emit ultrasonic waves from the side of the dispensing nozzle (21,22).

2. The ultrasonic cleaner according to claim 1, wherein the lateral surface portion of the cleaning tank (27) has a plurality of the ultrasonic transducers (201) installed thereon.

3. The ultrasonic cleaner according to claim 2, wherein a diameter of a common circle with which tip surfaces (214) of the front masses (205) of the plurality of ultrasonic transducers (201) are in contact is substantially equal to the diameters of the tip surfaces (214) of the front masses (205).

4. The ultrasonic cleaner according to claim 3, wherein two of the ultrasonic transducers (201) are arranged coaxially.

5. The ultrasonic cleaner according to claim 1, wherein
the front mass (205) has a step portion (213), and
the step portion (213) has a seal (204) installed thereon.

6. The ultrasonic cleaner according to claim 3, wherein an upper end portion of the recess (210) is 0.5 to 1 mm from an upper end portion of the tip surface (214) of the front mass (205).

7. The ultrasonic cleaner according to claim 1, further comprising a shake detection unit (721),
wherein the shake detection unit (721) is configured to stop driving of the ultrasonic transducer (201) upon detecting shake.

8. The ultrasonic cleaner according to claim 1, further comprising:
an ultrasonic transducer controller (301); and
a drive power supply (302).

9. The ultrasonic cleaner according to claim 8, further comprising a conveyance base (303).

10. The ultrasonic cleaner according to claim 8, wherein the cleaning tank (27) and the ultrasonic transducer (201), and the ultrasonic transducer controller (301) and the drive power supply (302) can be installed separately.

11. The ultrasonic cleaner according to claim 1, further comprising a barcode, a QR code (registered trademark), or an IC chip that enables type discrimination.

12. An automatic analyzer (10) comprising the ultrasonic cleaner according to any one of claims 1 to 11.

13. An automatic analyzer (10) comprising a configuration in which the ultrasonic cleaner according to any one of claims 1 to 11 is used by conveyance.

14. A method for cleaning a dispensing nozzle (21,22) by using the ultrasonic cleaner according to claim 1 by a signal from an automatic analyzer controller (701), the method comprising:
immersing the dispensing nozzle (21,22) in the cleaning liquid injected into the recess (210); and
emitting the ultrasonic waves from the tip portion of the front mass (205).

15. The method for cleaning a dispensing nozzle (21,22) according to claim 14, further comprising conveying the ultrasonic cleaner to a position where the dispensing nozzle (21,22) can be inserted into the recess (210), before immersing the dispensing nozzle (21,22).

16. The method for cleaning a dispensing nozzle (21,22) according to claim 14, wherein
the ultrasonic cleaner includes a plurality of the ultrasonic transducers (201), and
the ultrasonic waves are simultaneously emitted from the plurality of ultrasonic transducers (201).

17. The method for cleaning a dispensing nozzle (21,22) according to claim 14, wherein
the ultrasonic cleaner includes a plurality of the ultrasonic transducers (201), and
the ultrasonic waves are emitted alternately from a portion of the plurality of ultrasonic transducers (201).

18. The method for cleaning a dispensing nozzle (21,22) according to claim 14, wherein the ultrasonic waves are emitted toward the dispensing nozzle (21,22) from different directions by using two or more of the ultrasonic cleaners in which the tip portions of the front masses (205) have different directions.

## Patentansprüche

1. Ultraschallreiniger, der Folgendes umfasst:
einen Reinigungsbehälter (27), der eine Aussparung (210) aufweist, die das Einsetzen einer zu reinigenden Abgabedüse (21, 22) ermöglicht; und
einen Ultraschallwandler (201), der ein piezoelektrisches Element (207) und eine vordere Masse (205) aufweist,
**dadurch gekennzeichnet, dass**
ein Seitenflächenabschnitt des Reinigungsbehälters (27) mit einem Durchgangsloch versehen ist, das eine Öffnung auf einer Außenwandfläche des Reinigungsbehälters (27) und einer Innenwandfläche der Aussparung (210) aufweist,
die vordere Masse (205) in das Durchgangsloch eingesetzt ist und
ein Spitzenabschnitt der vorderen Masse (205) derart angeordnet ist, dass Ultraschallwellen von der Seite der Abgabedüse (21, 22) emittiert werden.

2. Ultraschallreiniger nach Anspruch 1, wobei der Seitenflächenabschnitt des Reinigungsbehälters (27) mehrere Ultraschallwandler (201) aufweist, die darauf installiert sind.

3. Ultraschallreiniger nach Anspruch 2, wobei ein Durchmesser eines gemeinsamen Kreises, mit dem die Spitzenflächen (214) der vorderen Massen (205) der mehreren Ultraschallwandler (201) in Kontakt sind, im Wesentlichen gleich den Durchmessern der Spitzenflächen (214) der vorderen Massen (205) ist.

4. Ultraschallreiniger nach Anspruch 3, wobei zwei der Ultraschallwandler (201) koaxial angeordnet sind.

5. Ultraschallreiniger nach Anspruch 1, wobei
die vordere Masse (205) einen Stufenabschnitt (213) aufweist und
der Stufenabschnitt (213) eine Dichtung (204) aufweist, die darauf installiert ist.

6. Ultraschallreiniger nach Anspruch 3, wobei ein oberer Endabschnitt der Aussparung (210) von einem oberen Endabschnitt der Spitzenfläche (214) der vorderen Masse (205) 0,5 bis 1 mm entfernt ist.

7. Ultraschallreiniger nach Anspruch 1, der ferner eine Rütteldetektionseinheit (721) umfasst,
wobei die Rütteldetektionseinheit (721) konfiguriert ist, aufgrund des Detektierens eines Rüttelns das Ansteuern des Ultraschallwandlers (201) anzuhalten.

8. Ultraschallreiniger nach Anspruch 1, der ferner Folgendes umfasst:
eine Ultraschallwandler-Steuereinheit (301); und
eine Antriebsstromversorgung (302).

9. Ultraschallreiniger nach Anspruch 8, der ferner einen Übertragungssockel (303) umfasst.

10. Ultraschallreiniger nach Anspruch 8, wobei der Reinigungsbehälter (27) und der Ultraschallwandler (201), und die Ultraschallwandler-Steuereinheit (301) und die Antriebsstromversorgung (302) getrennt installiert sein können.

11. Ultraschallreiniger nach Anspruch 1, der ferner einen Strichcode, einen QR-Code (eingetragenes Warenzeichen) oder einen IC-Chip, der eine Typenunterscheidung ermöglicht, umfasst.

12. Automatische Analysevorrichtung (10), die den Ultraschallreiniger nach einem der Ansprüche 1 bis 11 umfasst.

13. Automatische Analyseeinrichtung (10), die eine Konfiguration besitzt, in der der Ultraschallreiniger nach einem der Ansprüche 1 bis 11 durch Transport verwendet wird.

14. Verfahren zum Reinigen einer Abgabedüse (21, 22) unter Verwendung des Ultraschallreinigers nach Anspruch 1 durch ein Signal von einer Steuereinheit (701) einer automatischen Analysevorrichtung, wobei das Verfahren Folgendes umfasst.
Eintauchen der Abgabedüse (21, 22) in die Reinigungsflüssigkeit, die in die Aussparung (210) eingespritzt wird; und
Emittieren der Ultraschallwellen vom Spitzenabschnitt der vorderen Masse (205).

15. Verfahren zum Reinigen einer Abgabedüse (21, 22) nach Anspruch 14, das ferner das Transportieren des Ultraschallreinigers an eine Position, an der die Abgabedüse (21, 22) in die Aussparung (210) eingesetzt werden kann, vor dem Eintauchen der Abgabedüse (21, 22) umfasst.

16. Verfahren zum Reinigen einer Abgabedüse (21, 22) nach Anspruch 14, wobei
der Ultraschallreiniger mehrere Ultraschallwandler (201) umfasst und
die Ultraschallwellen von den mehreren Ultraschallwandlern (201) gleichzeitig emittiert werden.

17. Verfahren zum Reinigen einer Abgabedüse (21, 22) nach Anspruch 14, wobei
der Ultraschallreiniger mehrere Ultraschallwandler (201) umfasst und
die Ultraschallwellen abwechselnd von einem Teil der mehreren Ultraschallwandler (201) emittiert werden.

18. Verfahren zum Reinigen einer Abgabedüse (21, 22) nach Anspruch 14, wobei die Ultraschallwellen unter Verwendung von zwei oder mehr der Ultraschallreiniger, bei denen die Spitzenabschnitte der vorderen Massen (205) verschiedene Richtungen haben, aus verschiedenen Richtungen zur Abgabedüse (21, 22) emittiert werden.

## Revendications

1. Nettoyeur à ultrasons, comprenant :
un réservoir de nettoyage (27) ayant un évidement (210) qui permet une insertion d'une buse de distribution (21, 22) à nettoyer ; et
un transducteur à ultrasons (201) ayant un élément piézoélectrique (207) et une masse avant (205),
**caractérisé en ce que**
une portion de surface latérale du réservoir de nettoyage (27) est pourvue d'un trou traversant ayant une ouverture sur une surface de paroi extérieure du réservoir de nettoyage (27) et une surface de paroi intérieure de l'évidement (210),
la masse avant (205) est insérée dans le trou traversant, et
une portion de pointe de la masse avant (205) est disposée de façon à émettre des ondes ultrasoniques depuis le côté de la buse de distribution (21, 22).

2. Nettoyeur à ultrasons selon la revendication 1, dans lequel la portion de surface latérale du réservoir de nettoyage (27) a une pluralité de transducteurs à ultrasons (201) installés sur celle-ci.

3. Nettoyeur à ultrasons selon la revendication 2, dans lequel un diamètre d'un cercle commun avec lequel des surfaces de pointe (214) des masses avant (205) de la pluralité de transducteurs à ultrasons (201) sont en contact, est sensiblement égal aux diamètres des surfaces de pointe (214) des masses avant (205).

4. Nettoyeur à ultrasons selon la revendication 3, dans lequel deux des transducteurs à ultrasons (201) sont agencés de façon coaxiale.

5. Nettoyeur à ultrasons selon la revendication 1, dans lequel
la masse avant (205) a une portion en gradin (213), et
la portion en gradin (213) a un joint d'étanchéité (204) installé sur celle-ci.

6. Nettoyeur à ultrasons selon la revendication 3, dans lequel une portion d'extrémité supérieure de l'évidement (210) est à 0,5 à 1 mm d'une portion d'extrémité supérieure de la surface de pointe (214) de la masse avant (205).

7. Nettoyeur à ultrasons selon la revendication 1, comprenant en outre une unité de détection de secousses (721),
dans lequel l'unité de détection de secousses (721) est configurée pour arrêter un entraînement du transducteur à ultrasons (201) lors d'une détection de secousses.

8. Nettoyeur à ultrasons selon la revendication 1, comprenant en outre :
un contrôleur de transducteur à ultrasons (301) ; et
une alimentation en puissance d'entraînement (302).

9. Nettoyeur à ultrasons selon la revendication 8, comprenant en outre une base de convoyage (303).

10. Nettoyeur à ultrasons selon la revendication 8, dans lequel le réservoir de nettoyage (27) et le transducteur à ultrasons (201), et le contrôleur de transducteur à ultrasons (301) et l'alimentation en puissance d'entraînement (302) peuvent être installés séparément.

11. Nettoyeur à ultrasons selon la revendication 1, comprenant en outre un code-barres, un code QR (marque déposée), ou une puce de circuit intégré qui permet une discrimination de type.

12. Analyseur automatique (10) comprenant le nettoyeur à ultrasons selon l'une quelconque des revendications 1 à 11.

13. Analyseur automatique (10) comprenant une configuration dans laquelle le nettoyeur à ultrasons selon l'une quelconque des revendications 1 à 11 est utilisé par convoyage.

14. Procédé pour nettoyer une buse de distribution (21, 22) à l'aide du nettoyeur à ultrasons selon la revendication 1 via un signal provenant du contrôleur d'analyseur automatique (701), le procédé comprenant les étapes consistant à :
immerger la buse de distribution (21, 22) dans le liquide de nettoyage injecté jusque dans l'évidement (210) ; et
émettre les ondes ultrasoniques depuis la portion de pointe de la masse avant (205).

15. Procédé de nettoyage d'une buse de distribution (21, 22) selon la revendication 14, comprenant en outre l'étape consistant à convoyer le nettoyeur à ultrasons jusqu'à une position où la buse de distribution (21, 22) peut être insérée dans l'évidement (210), avant l'étape d'immersion de la buse de distribution (21, 22).

16. Procédé de nettoyage d'une buse de distribution (21, 22) selon la revendication 14, dans lequel
le nettoyeur à ultrasons inclut une pluralité de transducteurs à ultrasons (201), et
les ondes ultrasoniques sont émises simultanément depuis la pluralité de transducteurs à ultrasons (201).

17. Procédé de nettoyage d'une buse de distribution (21, 22) selon la revendication 14, dans lequel
le nettoyeur à ultrasons inclut une pluralité de transducteurs à ultrasons (201), et
les ondes ultrasoniques sont émises en alternance depuis une portion de la pluralité de transducteurs à ultrasons (201).

18. Procédé de nettoyage d'une buse de distribution (21, 22) selon la revendication 14, dans lequel les ondes ultrasoniques sont émises vers la buse de distribution (21, 22) depuis des directions différentes à l'aide de deux ou plusieurs des nettoyeurs à ultrasons dans lesquels les portions de pointe des masses avant (205) ont des directions différentes.
